# EUROPÄISCHE PATENTSCHRIFT

(11) **EP 3 290 260 B1**
(45) Veröffentlichungstag und Bekanntmachung des Hinweises auf die Patenterteilung: **03.04.2019**
(21) Anmeldenummer: 16186144.8
(22) Anmeldetag: 29.08.2016
(51) Int. Cl.: B60N 2/12

(54) **LÄNGSEINSTELLER FÜR EINEN FAHRZEUGSITZ UND FAHRZEUGSITZ**
LENGTH ADJUSTER FOR A VEHICLE SEAT AND VEHICLE SEAT
DISPOSITIF DE REGLAGE EN LONGUEUR DE SIEGE DE VEHICULE ET SIEGE DE VEHICULE

(43) Veröffentlichungstag der Anmeldung: 07.03.2018
(73) Patentinhaber: Adient Luxembourg Holding S.à r.l., 1855 Luxembourg (LU)
(72) Erfinder: UTZINGER, Karl, 66919 Weselberg (DE)
(74) Vertreter: Liedhegener, Ralf

(56) Entgegenhaltungen:
- WO-A1-03/062012
- WO-A1-2004/089683
- WO-A2-2013/147846

## Beschreibung

Die Erfindung betrifft einen Längseinsteller mit den Merkmalen des Oberbegriffs des Anspruchs 1 sowie einen Fahrzeugsitz.

### Stand der Technik

Im Stand der Technik sind verschiedene Easy-Entry-Systeme bekannt, welche einen erleichterten Einstieg in eine zweite Sitzreihe eines Fahrzeuges ermöglichen. Das Easy-Entry-System ist durch einen Entriegelungshebel, welcher üblicherweise an einer Rückenlehne des Fahrzeugsitzes angeordnet ist, betätigbar, wodurch die Rückenlehne des Fahrzeugsitzes aus einem Einstiegsbereich schwenkt. Ist der Fahrzeugsitz auf Schienen angeordnet, kann der Fahrzeugsitz bei Betätigung des Entriegelungshebels zusätzlich oder alternativ in Fahrtrichtung aus dem Einstiegsbereich heraus verschiebbar sein.

In an sich bekannter Weise ermöglicht eine Easy-Entry-Verstellvorrichtung für einen Fahrzeugsitz eine Verstellbarkeit des Fahrzeugsitzes zwischen einer Gebrauchsposition und einer Easy-Entry-Position. Eine solche Verstellbarkeit ist insbesondere für solche Fahrzeuge besonders vorteilhaft, die lediglich eine Türe pro Fahrzeugseite haben. Beim Überführen des Fahrzeugsitzes von der Gebrauchsposition in die Easy-Entry-Position wird sowohl ein Lehnenbeschlag der Verstellvorrichtung, als auch eine Sitzlängsverriegelung der Verstellvorrichtung gelöst. Das Lösen des Lehnenbeschlags ermöglicht ein Verschwenken der Sitzlehne des Fahrzeugsitzes nach vorn in Richtung eines Sitzteils des Fahrzeugsitzes, während das Lösen der Sitzlängsverriegelung ein Vorschieben des gesamten Fahrzeugsitzes in Fahrtrichtung ermöglicht. Ein Fahrzeuginsasse erlangt somit Zugang zu den Rücksitzen des Fahrzeugs.

Aus der DE 102 02 179 A1 ist allgemein ein gattungsgemäßer Längseinsteller für einen Fahrzeugsitz bekannt, welcher eine Memory-Vorrichtung zur Erfassung einer relativen Sitzlängsverschiebung aufweist. Die Memory-Vorrichtung ist hierbei in einem inneren, zwischen einer Oberschiene und einer Unterschiene gebildeten, Bauraum angeordnet und mit der Oberschiene verbunden. Die Memory-Vorrichtung weist ein mit der Unterschiene in Eingriff bringbares Sperrelement auf, welches im Falle einer Betätigung der Sperrfunktion sämtliche auf das Sperrelement wirkende Kräfte in die Memory-Vorrichtung einleitet. Zum Abstoppen des Fahrzeugsitzes wird das Sperrelement in Eingriff in ein Lochbild der Unterschiene oder in Eingriff in ein an der Unterschiene befestigtes Bauteil, welches ein Lochbild besitzt, gebracht.

Es sind ebenso Memory-Vorrichtungen bekannt, bei denen ein in der Unterschiene in Längsrichtung verschiebliches aus mehreren Bauteilen bestehendes Abstoppelement geführt ist, welches an einer wiederholt einzunehmenden Position in der Unterschiene abgelegt wird. Entweder greift das Abstoppelement direkt in ein Lochbild der Unterschiene ein, oder es greift in ein mit der Unterschiene verbundenen, mit einem Lochbild versehenen Zusatzbauteil ein. Der Fahrzeugsitz ist somit durch ein Anstoßen und Abstützen an diesem an der wiederholt einzunehmenden Position abgelegten Abstoppelement abstoppbar. Die WO2004/089683A1 zeigt einen Längseinsteller für einen ein Sitzteil und eine Lehne aufweisenden Fahrzeugsitz, wobei der Längseinsteller zwei Sitzschienen aufweist, wobei eine der ersten Sitzschiene zugeordnete und mit der zweiten Sitzschiene zusammenwirkende Memory-Vorrichtung vorgesehen ist, wobei eine von einer als Memory-Position bezeichneten Sitzlängsposition ausgehende Relativbewegung zwischen der ersten Sitzschiene und der zweiten Sitzschiene mittels eines Zahnrads der Memory-Vorrichtung erfassbar ist, wobei das Reibrad hierzu eine relativ zur Memory-Vorrichtung bewegbare Kontaktfläche kontaktiert und abfährt, wobei das Reibrad der Memory-Vorrichtung bei einem Wiedererreichen der Memory-Position blockierbar ist, wobei eine zwischen der ersten Sitzschiene und der zweiten Sitzschiene wirkende Schienenverriegelung mittels eines Handgriffs und durch ein Vorklappen der Lehne des Fahrzeugsitzes entriegelbar ist, wobei ein Betätigungshebel auf einen Rücksetzhebel wirkt und die Memory-Vorrichtung hierdurch zurücksetzbar ist, wenn eine Betätigung der Schienenverriegelung mittels des Handgriffs erfolgt.

### Aufgabe

Der Erfindung liegt die Aufgabe zu Grunde, einen Längseinsteller der eingangs genannten Art zu verbessern, insbesondere eine logische Unterscheidung zu ermöglichen, ob der Längseinsteller mittels eines Handgriffs oder durch ein Vorklappen der Lehne betätigt wird, sowie einen entsprechenden Fahrzeugsitz bereitzustellen.

### Lösung

Diese Aufgabe wird erfindungsgemäß gelöst durch einen Längseinsteller für einen ein Sitzteil und eine Lehne aufweisenden Fahrzeugsitz, insbesondere einen Kraftfahrzeugsitz. Der Längseinsteller weist eine erste Sitzschiene und eine zweite Sitzschiene auf, wobei die erste Sitzschiene relativ zur zweiten Sitzschiene in einer Längsrichtung verschiebbar ist. Ferner ist eine der ersten Sitzschiene zugeordnete und mit der zweiten Sitzschiene zusammenwirkende Memory-Vorrichtung vorgesehen, wobei eine von einer als Memory-Position bezeichneten Sitzlängsposition ausgehende Relativbewegung zwischen der ersten Sitzschiene und der zweiten Sitzschiene mittels eines Reibrades der Memory-Vorrichtung erfassbar ist, wobei das Reibrad hierzu eine relativ zur Memory-Vorrichtung bewegbare Kontaktfläche kontaktiert und abfährt. Ferner ist das Reibrad der Memory-Vorrichtung bei einem Wiedererreichen der Memory-Position gegen eine Rotation blockierbar. Eine zwischen der ersten Sitzschiene und der zweiten Sitzschiene wirkende Schienenverriegelung ist mittels eines Handgriffs oder durch ein Vorklappen der Lehne des Fahrzeugsitzes entriegelbar. Wenn eine Betätigung der Schienenverriegelung mittels des Handgriffs erfolgt, wirkt ein Betätigungshebel auf einen Rücksetzhebel, wodurch die Memory-Vorrichtung zurücksetzbar ist. Wenn die Betätigung der Schienenverriegelung durch ein Vorklappen der Lehne erfolgt, befindet sich der Betätigungshebel außer Wirkverbindung mit dem Rücksetzhebel.

Dadurch, dass das Reibrad der Memory-Vorrichtung bei einem Wiedererreichen der Memory-Position gegen eine Rotation blockierbar ist, ist es möglich, insbesondere aufgrund der Reibung zwischen Reibrad und Kontaktfläche, ein Verschieben der ersten Sitzschiene relativ zur zweiten Sitzschiene in Richtung der Memory-Position ab zu stoppen, sowie ein Verschieben der ersten Sitzschiene über die Memory-Position hinaus zu verhindern.

Dadurch, dass ein Betätigungshebel auf einen Rücksetzhebel wirkt und die Memory-Vorrichtung hierdurch zurücksetzbar ist, wenn eine Betätigung der Schienenverriegelung mittels des Handgriffs erfolgt, und dass sich der Betätigungshebel außer Wirkverbindung mit dem Rücksetzhebel befindet, wenn die Betätigung der Schienenverriegelung durch ein Vorklappen der Lehne erfolgt, lässt sich eine logische Unterscheidung, durch welches Ereignis eine Entriegelung der Schienenverriegelung ausgelöst wurde, mit wenigen und einfachen Mitteln mechanisch umsetzen.

Ferner kann auf einen Einsatz einer üblicherweise innerhalb eines von der ersten Sitzschiene und der zweiten Sitzschiene umschlossenen Hohlraums angeordneten und von der Memory-Vorrichtung betätigten Verriegelungseinrichtung verzichtet werden. Folglich bedarf es keiner Durchführung von Hebeln oder Gestängen durch eine entsprechende Durchtrittsöffnung in der ersten Sitzschiene, wodurch diese nicht durch die Durchtrittsöffnung in ihrer Stabilität und Belastbarkeit beeinträchtigt ist. Das zusätzliche Bremselement bewirkt darüber hinaus die Möglichkeit, die Relativbewegung der ersten Sitzschiene relativ zur zweiten Sitzschiene aus einer höheren Geschwindigkeit abzubremsen und somit eine höhere Lastaufnahmefähigkeit bereitzustellen.

Vorteilhafte Ausgestaltungen, welche einzeln oder in Kombination miteinander eingesetzt werden können, sind Gegenstand der Unteransprüche.

Das Reibrad kann um eine Reibradachse drehbar in einer um eine Schwingenachse schwenkbaren Reibradschwinge gelagert sein. Die Reibradschwinge kann unter Erzeugung einer Andruckkraft zwischen dem Reibrad und der Kontaktfläche in Richtung der Kontaktfläche der zweiten Sitzscheine federbelastet sein.

An einem hinteren Ende der Reibradschwinge kann ein Bremselement angeordnet sein. Das Bremselement kann bevorzugt einer Bewegung der Reibradschwinge folgend ausgestaltet, bzw. angeordnet sein. Das Bremselement kann mittels eines Adapters an der Reibradschwinge gehalten sein.

Die Reibradschwinge kann mittels des Rücksetzhebels derart verschwenkbar sein, dass das Reibrad von der Kontaktfläche abhebbar ist. Eine Resetfeder kann wenigstens mittelbar auf das Reibrad wirken und das Reibrad zurücksetzen, wenn das Reibrad von der Kontaktfläche abgehoben ist. Der Rücksetzhebel kann auf eine an der Reibradschwinge angelenkte Koppel wirken.

Die Reibradachse kann parallel zur Längsrichtung betrachtet hinter der Schwingenachse angeordnet sein. Die Reibradachse kann einen geringeren Abstand zur Kontaktfläche als die Schwingenachse aufweisen. Durch eine derartige geometrische Anordnung der Reibradachse sowie der Schwingenachse, wobei allgemein der Abstand der Reibradachse zur Kontaktfläche im Wesentlichen dem Radius des Reibrades entspricht, kann in vorteilhafter Weise insbesondere eine Andruckkraft des Reibrades auf die Kontaktfläche erhöht und dadurch die Wahrscheinlichkeit eines unerwünschten Abhebens des Reibrades von der Kontaktfläche verringert werden.

Der Rücksetzhebel kann federbelastet sein. Ein mit dem Rücksetzhebel um eine gemeinsame Achse schwenkbarer erster Steuerhebel kann vorgesehen sein, welcher an seinem von der Achse beabstandeten Ende einen zweiten Steuerhebel schwenkbar hält.

Ein an einem freien Ende des zweiten Steuerhebels gehaltener Steuerbolzen kann im Schwenkbereich des Betätigungshebels angeordnet sein, wenn der erste Steuerhebel in einer ersten Endstellung gehalten ist, und der Steuerbolzen kann aus dem Schwenkbereich des Betätigungshebels herausgeschwenkt sein, wenn der erste Steuerhebel in eine zweite Endstellung verschwenkt ist.

Eine Schenkelfeder kann vorgesehen sein, welche den ersten Steuerhebel und den Rücksetzhebel in entgegengesetzter Drehrichtung um die gemeinsame Achse federbelastet, insbesondere gegeneinander verspannt.

Mittels einer Seilrolle kann der erste Steuerhebel in Richtung der zweiten Endstellung verschwenkbar sein, wenn die Lehne vorgeklappt ist, wobei die Seilrolle ferner auf den Betätigungshebel wirkt, wenn die Lehne vorgeklappt ist.

Das Reibrad kann derart ausgestaltet sein, dass das Reibrad eine von einem Reibbelag vollumfänglich umschlossene Felge aufweist.

Die Felge des Reibrads kann eine Ausnehmung, insbesondere ein Langloch, aufweisen. Die Ausnehmung kann in axialer Richtung betrachtet, in einer stirnseitigen Fläche angeordnet sein. Die Ausnehmung kann mit einem Sperrbolzen zusammenwirken, indem ein Sperrbolzen parallel zur Reibradachse in die Ausnehmung einführbar ist. Der Sperrbolzen kann mittels eines ersten Federelements in Richtung einer Freigabestellung, in welcher der Sperrbolzen außer Eingriff mit der Ausnehmung ist, federelastisch vorgespannt sein. Dies ermöglicht eine mechanische kraftbetätigte Aktivierung des Sperrbolzens, bzw. eine im Wesentlichen kraftneutrale Bereitstellung in einer Ruhestellung oder Neutralstellung. Die Ausnehmung kann eine Vertiefung oder eine durchgehende Öffnung sein.

Das Reibrad kann während der Relativbewegung ein Getriebe der Memory-Vorrichtung antreiben, welches mittels einer Spindel-Mutter-Anordnung auf eine Zahnstange wirkt. Das Getriebe ist bevorzugt derart ausgelegt, dass eine eingangsseitige Drehzahl des Reibrades mit einem vorbestimmten Untersetzungsverhältnis auf die Spindel-Mutter-Anordnung übertragbar ist.

Die Zahnstange kann eine Steuerkontur aufweisen, wobei der Sperrbolzen mittels der Steuerkontur von der Freigabestellung in eine Blockierstellung, in welcher der Sperrbolzen in Eingriff mit der Ausnehmung ist, antreibbar ist. Die Zahnstange kann bevorzugt mittels eines Federelements in Richtung einer mit der Freigabestellung des Sperrbolzens kooperierenden Stellung der Zahnstange federelastisch vorgespannt sein.

Das mittels des Sperrbolzens blockierte Reibrad kann, insbesondere in Verbindung mit einer zuvor beschriebenen geometrischen Anordnung der Reibradachse und der Schwingenachse, über den Sperrbolzen ein Moment auf die Reibradschwinge bewirken, wodurch das Reibrad gegen die Kontaktfläche gedrückt wird.

Die Reibradachse und die Schwingenachse können parallel zu einer Vertikalrichtung verlaufen. Dies hat den Vorteil, dass eine für die Memory-Vorrichtung benötige Bauhöhe reduziert sein kann. Alternativ können die Reibradachse und die Schwingenachse jedoch auch parallel zu einer Querrichtung verlaufen.

Die zu Grunde liegende Aufgabe wird ferner erfindungsgemäß gelöst durch einen Fahrzeugsitz aufweisend ein Sitzteil, eine Lehne und einen mit dem Sitzteil verbundenen Längseinsteller gemäß der vorhergehenden Beschreibung.

### Figuren und Ausführungsformen der Erfindung

Bevor nachfolgend Ausgestaltungen der Erfindung eingehender an Hand von Zeichnungen beschrieben werden, ist zunächst festzuhalten, dass die Erfindung nicht auf die beschriebenen Komponenten oder die beschriebenen Verfahrensschritte beschränkt ist. Weiterhin stellt auch die verwendete Terminologie keine Einschränkung dar, sondern hat lediglich beispielhaften Charakter. Soweit nachfolgend in der Beschreibung der Singular verwendet wird ist dabei jeweils der Plural mitumfasst, soweit der Kontext dies nicht explizit ausschließt.

Im Folgenden ist die Erfindung anhand von in den Figuren dargestellten vorteilhaften Ausführungsbeispielen näher erläutert. Die Erfindung ist jedoch nicht auf diese Ausführungsbeispiele beschränkt. Es zeigen:
- Fig. 1:: eine schematische Ansicht eines Fahrzeugsitzes mit einem erfindungsgemäßen Längseinsteller,
- Fig. 2:: eine Darstellung eines erfindungsgemäßen Längseinstellers,
- Fig. 3:: eine perspektivische Darstellung eines Sitzschienenpaares mit einer Memory-Vorrichtung,
- Fig. 4:: eine perspektivische Darstellung der Memory-Vorrichtung von schräg oben,
- Fig. 5:: eine perspektivische Darstellung der Memory-Vorrichtung von schräg unten,
- Fig. 6:: eine Seitenansicht der Memory-Vorrichtung ohne Gehäuse in Querrichtung,
- Fig. 7:: eine Seitenansicht der Memory-Vorrichtung ohne Gehäuse aus einem zu Fig. 7 entgegen gerichteten Blickwinkel,
- Fig. 8:: eine ausschnittsweise Ansicht von oben auf die Memory-Vorrichtung,
- Fig. 9:: eine Schnittdarstellung entlang der Schnittverlaufslinie IX-IX in Fig. 8,
- Fig. 10:: eine weitere perspektivische Darstellung des Sitzschienenpaares gemäß Fig. 3,
- Fig. 11:: eine Seitenansicht der Memory-Vorrichtung in einem Grundzustand,
- Fig. 12:: eine Ansicht von oben auf die Memory-Vorrichtung von Fig. 11, ohne Gehäuse,
- Fig. 13:: eine Schnittdarstellung entlang der Schnittverlaufslinie XIII-XIII in Fig. 12,
- Fig. 14:: eine Ansicht von unten auf die Memory-Vorrichtung von Fig. 11
- Fig. 15:: eine Seitenansicht der Memory-Vorrichtung in einem Zustand mit manuell angehobenem Handgriff,
- Fig. 16:: eine Ansicht von unten auf die Memory-Vorrichtung von Fig. 15,
- Fig. 17:: eine Schnittdarstellung gemäß der Schnittverlaufslinie XIII-XIII in Fig. 12, jedoch in einem Zustand mit vorgeklappter Lehne, und
- Fig. 18:: eine Seitenansicht der Memory-Vorrichtung von Fig. 17.

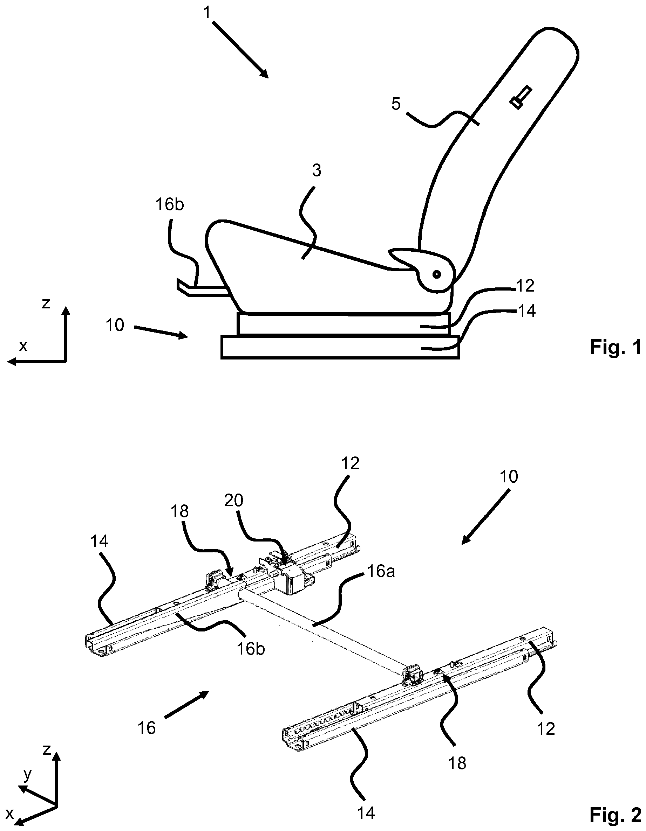

Ein in Figur 1 schematisch dargestellter Fahrzeugsitz 1 wird nachfolgend unter Verwendung von drei senkrecht zueinander verlaufenden Raumrichtungen beschrieben. Eine Längsrichtung x verläuft bei einem im Fahrzeug eingebauten Fahrzeugsitz 1 weitgehend horizontal und vorzugsweise parallel zu einer Fahrzeuglängsrichtung, die der gewöhnlichen Fahrtrichtung des Fahrzeuges entspricht. Eine zu der Längsrichtung x senkrecht verlaufende Querrichtung y ist im Fahrzeug ebenfalls horizontal ausgerichtet und verläuft parallel zu einer Fahrzeugquerrichtung. Eine Vertikalrichtung z verläuft senkrecht zu der Längsrichtung x und senkrecht zu der Querrichtung y. Bei einem im Fahrzeug eingebauten Fahrzeugsitz 1 verläuft die Vertikalrichtung z parallel zu der Fahrzeughochachse.

Die verwendeten Positions- und Richtungsangaben, wie beispielsweise vorne, hinten, oben und unten beziehen sich auf eine Blickrichtung eines im Fahrzeugsitz 1 sitzenden Insassen in normaler Sitzposition, wobei der Fahrzeugsitz 1 im Fahrzeug eingebaut, in einer zur Personenbeförderung geeigneten Gebrauchsposition mit aufrecht stehender Lehne 5 und wie üblich in Fahrtrichtung ausgerichtet ist. Der erfindungsgemäße Fahrzeugsitz 1 kann jedoch auch in abweichender Ausrichtung, beispielsweise quer zur Fahrtrichtung verbaut werden.

Der in Fig. 1 gezeigte Fahrzeugsitz 1 für ein Kraftfahrzeug weist ein Sitzteil 3 und eine relativ zum Sitzteil 3 in ihrer Neigung einstellbare Lehne 5 auf. Die Neigung der Lehne 5 kann beispielsweise mittels eines Rastbeschlages oder eines Getriebebeschlages einstellbar sein. Der Fahrzeugsitz 1 ist zur Einstellung einer Sitzlängsposition auf einem Längseinsteller 10 montiert.

Der in Fig. 2 gezeigte Längseinsteller 10 des Fahrzeugsitzes 1 weist zwei Sitzschienenpaare auf, welche jeweils aus einer ersten Sitzschiene 12, insbesondere einer sitzfesten Oberschiene, und einer zweiten Sitzschiene 14, insbesondere einer fahrzeugfesten Unterschiene, gebildet sind. Die Sitzschienen, eines jeden Sitzschienenpaares, umgreifen einander wechselseitig und sind in Längsrichtung x relativ zueinander beweglich. Die ersten Sitzschienen 12 und die zweiten Sitzschienen 14 des jeweiligen Sitzschienenpaares sind mittels einer Schienenverriegelung 18 miteinander verriegelbar, wobei zur gemeinsamen Betätigung der beiden Schienenverriegelungen 18 eine Betätigungseinrichtung 16 mit einer die beiden Schienenverriegelungen 18 wirkverbindenden Übertragungsstange 16a vorgesehen ist, wobei die Übertragungsstange 16a mit beiden Schienenverriegelungen 18 zusammenwirkt. Die Betätigungseinrichtung 16 weist einen an der Übertragungsstange 16a angreifenden Handgriff 16b auf. Ferner weist der Längseinsteller 10 eine Memory-Vorrichtung 20 auf.

Der in Fig. 2 gezeigte Längseinsteller 10 befindet sich in einem Grundzustand. Der Grundzustand des gezeigten Längseinstellers 10 beschreibt jenen Zustand, wenn der Fahrzeugsitz 1 eine von dem Insassen voreingestellte Sitzlängsposition eingenommen hat und die Lehne 5 des Fahrzeugsitzes 1 aufgerichtet ist, und der Fahrzeugsitz 1 sich demnach in einer zur Personenbeförderung geeigneten Gebrauchsstellung befindet. Unter dem Begriff "Grundzustand" des Fahrzeugsitzes 1 oder des Längseinsteller 10 ist allgemein zu verstehen, dass der Grundzustand der entsprechend referenzierten Komponenten - sofern nicht explizit anderes definiert - stets einem Zustand entspricht, wenn sich der Fahrzeugsitz 1 in einer Gebrauchsstellung befindet und sich die Memory-Vorrichtung 20, insbesondere ein Getriebe 42 der Memory-Vorrichtung 20, in einem der Memory-Position entsprechenden Zustand befindet. Wird hierbei lediglich auf ein einzelnes Bauteil Bezug genommen, kann ebenfalls von einer Grundstellung gesprochen sein. Die Memory-Position entspricht hierbei einer zuvor eingestellten und gespeicherten Sitzlängsposition, welche durch ein Längsverschieben des Fahrzeugsitzes 1 verlassen und anschließend wieder eingenommen werden kann.

Die Memory-Vorrichtung 20 wird anhand nachfolgender Zeichnungen eingehender beschrieben. Die Memory-Vorrichtung 20 erfasst eine aus einer Längsverschiebung des Fahrzeugsitzes 1 resultierende Relativbewegung zwischen der ersten Sitzschiene 12 und der zweiten Sitzschiene 14 mittels eines Reibrades 22 und des Getriebes 42. Die zwischen der ersten Sitzschiene 12 und der zweiten Sitzschiene 14 wirkende Schienenverriegelung 18 ist mittels eines Betätigungshebels 16c entriegelbar, wobei ein Vorklappen der Lehne 5 des Fahrzeugsitzes 1 wenigstens mittelbar auf den Betätigungshebel 16c wirkt, um die Schienenverriegelung 18 zu entriegeln.

Eine von dem Längseinsteller 10 grundsätzlich bereitgestellte Funktion zum Einstellen der Sitzlängsposition des Fahrzeugsitzes 1 ist mittels des Handgriffs 16b, welcher wie dargestellt an der Übertragungsstange 16a angeordnet ist, betätigbar. Ferner ist der Betätigungshebel 16c an der Übertragungsstange 16a angeordnet, welcher dazu eingerichtet ist, auf eine nicht dargestellte Schienenverriegelung 18 des Schienenpaares, insbesondere beider Schienenpaare, des Längseinstellers 10 zu wirken, um dieses zu entriegeln und den Fahrzeugsitz 1 entsprechend parallel zur Längsrichtung x verfahren und/oder verschieben zu können. Der Betätigungshebel 16c ist beispielsweise mittels einer Schweißverbindung mit der Übertragungsstange 6 verbunden und mit dieser zusammen über eine gemeinsame Drehachse drehbar an der ersten Sitzschiene 12 gelagert. Der Betätigungshebel 16c kann einteilig mit dem Handgriff 16b ausgebildet sein. Die Übertragungsstange 16a dient im Wesentlichen der gleichzeitigen Betätigung und Entriegelung der Schienenverriegelung 18 eines ersten Sitzschienenpaares und einer Schienenverriegelung 18 eines gleichfalls aus einer weiteren ersten Sitzschiene 12 und einer weiteren zweiten Sitzschiene 14 gebildeten Sitzschienenpaares des Längseinstellers 10, welches an einer gegenüberliegenden Seite des Fahrzeugsitzes 1 vorgesehen sein kann.

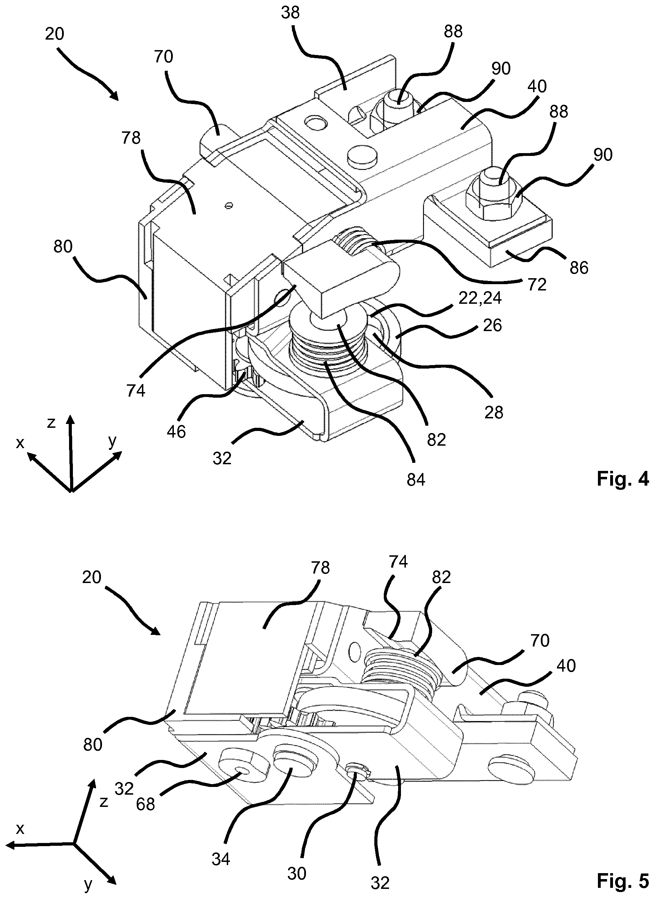

Ferner ist die Memory-Vorrichtung 20 eingerichtet, einer Easy-Entry-Funktion zu dienen und beim Betätigen derselben mittels des Getriebes 42 eine Längsverschiebung, bzw. eine Relativbewegung der ersten Sitzschiene 12 relativ zur zweiten Sitzschiene 14 längenmäßig zu erfassen und im Falle eines wiederholten Einnehmens der Memory-Position eine weitere Längsverschiebung zu blockieren, insbesondere durch ein Blockieren des Reibrades 22 zu verhindern. Um das Getriebe 42 vor Verschmutzung oder sonstiger nachteiliger Funktionsbeeinflussung zu schützen, ist das Getriebe 42 bevorzugt mit einem Getriebegehäuse, insbesondere einem ersten Gehäuseteil 78 und einem zweiten Gehäuseteil 80, verdeckt, welches in Fig. 4 dargestellt ist. Die Memory-Position entspricht hierbei der - gegebenenfalls auch als solche bezeichneten - "gespeicherten Sitzlängsposition" und ist nachfolgend als synonym verwendet.

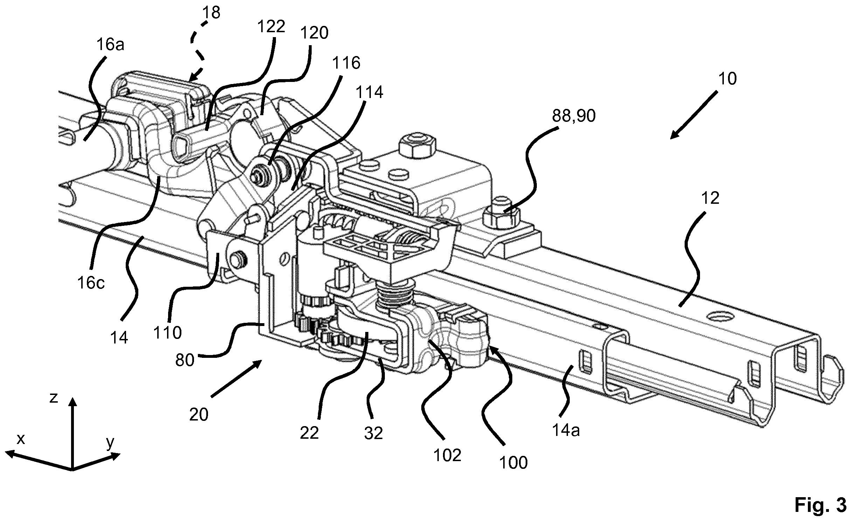

Fig. 3 zeigt eine vergrößerte Darstellung des Sitzschienenpaares mit der Memory-Vorrichtung 20, wobei die Memory-Vorrichtung 20 der ersten Sitzscheine 12 zugeordnet ist und mit der zweiten Sitzschiene 14 zusammenwirkt. Die Memory-Vorrichtung 20 ist bevorzugt fest mit der ersten Sitzschiene 12 verbunden, vorliegend mittels vorzugsweise an der ersten Sitzschiene 12 befestigten Gewindebolzen 88 und Muttern 90 montiert. Mittels der Memory-Vorrichtung 20 ist eine von einer als Memory-Position bezeichneten Sitzlängsposition ausgehende Relativbewegung zwischen der ersten Sitzschiene 12 und der zweiten Sitzschiene 14 erfassbar. Hierzu weist die Memory-Vorrichtung 20 das Reibrad 22 auf, welches eine relativ zur Memory-Vorrichtung 20 bewegbare Kontaktfläche 14a der zweiten Sitzschiene 14 kontaktiert und abfährt. Das Reibrad 22 ist in einer Reibradschwinge 32 drehbar gelagert.

Der Längseinsteller 10 weist eine Seilrolle 120 auf, welche dazu dient ein Ende eines nicht dargestellten Bowdenzuges aufzunehmen. Ein zweites Ende des Bowdenzugs ist bevorzugt mit der Lehne 5 verbindbar, so dass die Seilrolle 120 um die Drehachse der Seilrolle 120 verdreht ist, wenn die Lehne 5 vorgeklappt ist. Die Seilrolle 120 weist einen axial abstehenden Nocken 122 auf, welcher auf ein freies Ende des Betätigungshebels 16c wirkt, wenn die Seilrolle 120 verdreht wird.

Die Memory-Vorrichtung 20 weist ein aus dem ersten Gehäuseteil 78 und dem zweiten Gehäuseteil 80 gebildetes Gehäuse auf. Die Memory-Vorrichtung 20 weist an einem stirnseitigen Endabschnitt der Reibradschwinge 32 einen Adapter 102 auf. Der Adapter 102 hält ein Bremselement 100. Das Bremselement 100 erstreckt sich vorliegend im Wesentlichen über die gesamte Erstreckung der Reibradschwinge 32 in Vertikalrichtung z. Folglich ist das Bremselement 100 vorliegend breiter als das Reibrad 22. Das Bremselement 100 kann aus einem Kunststoff, insbesondere aus einem Elastomer, gefertigt sein.

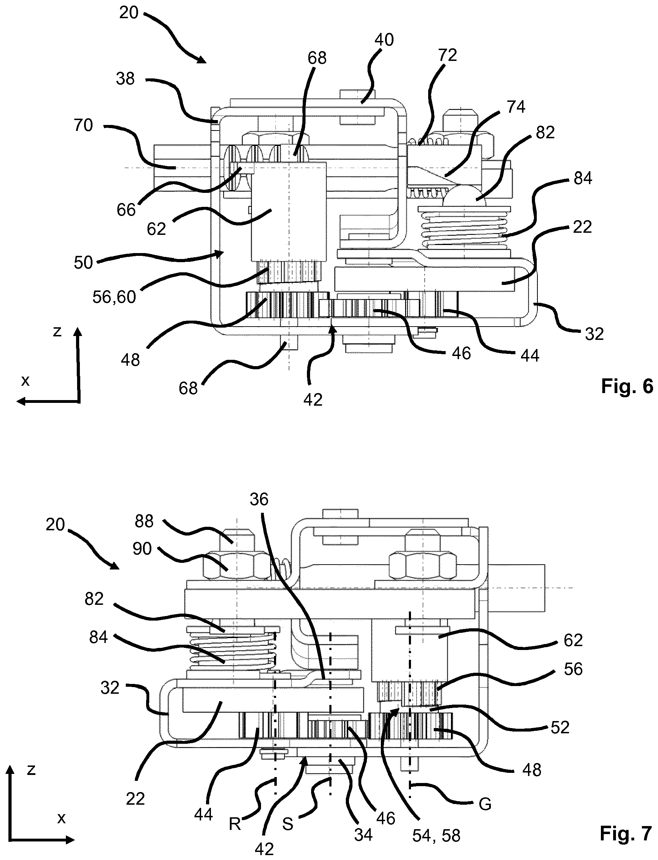

Die Figuren 4 bis 7 zeigen die Memory-Vorrichtung 20 aus unterschiedlichen Blickwinkeln.

Zur Befestigung der Memory-Vorrichtung 20 an der ersten Sitzschiene 12 dienen ein erstes und ein zweites Trägerteil 38, 40, welche miteinander verbindbar, insbesondere vernietbar, sind. Das erste und zweite Trägerteil 38, 40 sind bevorzugt aus einem metallischen Werkstoff, insbesondere einem Metallblech, gefertigt. Das erste und zweite Trägerteil 38, 40 sind mittels jeweils eines Gewindebolzens 88 und einer Mutter 90 mit der ersten Sitzschiene 12 verschraubt. Hierbei ist zwischen den Trägerteilen 38, 40 und der ersten Sitzschiene 12 ein Abstandselement 86 vorgesehen, welches unterschiedlich dick ausgestaltet sein kann und einer Anpassung der Lage des Reibrades 22 an der zweiten Sitzschiene 14 aufgrund unterschiedlich ausgestalteter Schienenprofile dient.

Das Reibrad 22 weist eine Felge 24 auf, welche vollumfänglich von einem Reibbelag 26 umschlossen ist. Das Reibrad 22 ist mittels eines Lagerstifts 30 in der Reibradschwinge 32 gehalten und um eine Reibradachse R drehbar gelagert. Die Reibradschwinge 32 ist um eine Schwingenachse S schwenkbar gelagert. Vorliegend verlaufen die Reibradachse R und die Schwingenachse S parallel zur Vertikalrichtung z.

Das Reibrad 22 treibt während der Relativbewegung das Getriebe 42 der Memory-Vorrichtung 20 an. Hierzu ist zunächst ein erstes Zahnrad 44 des Getriebes 42 um die Reibradachse R drehbar gelagert und mit dem Reibrad 22 drehfest verbunden. Eine Drehbewegung des Reibrades 22 ist somit mittels des ersten Zahnrades 44 an ein benachbart angeordnetes und mit dem ersten Zahnrad 44 in Eingriff befindliches zweites Zahnrad 46 übertragbar. Das zweite Zahnrad 46 ist bevorzugt um die Schwingenachse S drehbar gelagert. Vorliegend ist das zweite Zahnrad 46 zusammen mit einem unteren Arm der Reibradschwinge 32 mittels eines ersten Bolzens 34 in dem ersten Trägerteil 38 gehaltert. Ein oberer Arm der Reibradschwinge 32 ist mittels eines zweiten Bolzens 36 in dem zweiten Trägerteil 40 gehaltert. Ein drittes Zahnrad 48 des Getriebes 42 ist um einen Lagerbolzen 68 einer Spindel-Mutter-Anordnung 50 drehbar gelagert und zudem drehfest mit einer Gewindespindel 52 der Spindel-Mutter-Anordnung 50 verbunden. Somit kann eine Drehbewegung des Reibrades 22 über das erste und zweite Zahnrad 44, 46 auf das dritte Zahnrad 48 und die Gewindespindel 52 übertragen werden. Die Zahnräder 44, 46, 48 des Getriebes 42 sind paarweise entsprechend vorbestimmter Untersetzungsverhältnisse und/oder Übersetzungsverhältnisse dimensioniert.

Die Gewindespindel 52 ist mittels des Lagerbolzens 68 um eine Spindelachse G drehbar gelagert. Abtriebsseitig wirkt die Spindel-Mutter-Anordnung 50 mittels eines drehfest an einem Lagerabschnitt 62 der Spindel-Mutter-Anordnung 50 angeordneten Zahnsegments 66 auf eine Zahnstange 70. Die Zahnstange 70 ist in einer in dem zweiten Gehäuseteil 80 geformten Führung verschiebbar gehalten. Die Führung weist eine Öffnung zum Durchgriff für das Zahnsegment 66 auf. Die in Längsrichtung x äußeren Ränder der Öffnung dienen jeweils als ein Endanschlag für das Zahnsegment 66.

An einem aus dem Gehäuse ausgetretenen Ende der Zahnstange 70 ist eine Steuerkontur 74 vorgesehen, welche auf einen Sperrbolzen 82 wirkt. Der Sperrbolzen 82 ist mit einer Ausnehmung 28 in der Felge 24 des Reibrades 22 in Eingriff bringbar. Der Sperrbolzen 82 ist mittels einem Federelement 84 in Richtung einer Freigabestellung, in welcher der Sperrbolzen 82 außer Eingriff mit der Ausnehmung 28 der Felge 24 ist, vorgespannt. In dem in den Figuren 4 bis 7 dargestellten Zustand der Memory-Vorrichtung 20 befindet sich der Sperrbolzen 82 in der Blockierstellung, in welcher der Sperrbolzen 82 in Eingriff mit der Ausnehmung 28 ist, wenn sich der Fahrzeugsitz 1 in der Memory-Position befindet. Die Zahnstange 70 ist bevorzugt mittels eines Federelements 72 in Richtung einer mit der Freigabestellung des Sperrbolzens 82 kooperierenden Stellung der Zahnstange 70 federelastisch vorgespannt. Die Zahnstange 70 kann zusätzlich beispielsweise zur Betätigung einer Verriegelung eines Lehnenbeschlags dienen, so dass bei Verlassen einer Memory-Position die Lehne 3 in einer vorgeschwenkten Stellung verriegelt bleibt und bei anschließendem Wiedererreichen der Memory-Position automatisch in ihrer Schwenkbewegung freigegeben wird.

Ferner ist ein mit der Spindel-Mutter-Anordnung 50 zusammenwirkender Anschlag 54 vorgesehen, welcher sich in der Memory-Position in Anlage mit einem Anschlag 58 einer auf einem Außengewinde der Gewindespindel 52 gelagerten Mutter 56 befindet. Der Anschlag 54 ist vorliegend an einem Abschnitt der Gewindespindel 52 ausgebildet. Der Anschlag 54 kann jedoch beispielsweise auch als ein Teil des stirnseitig an der Gewindespindel 52 angeordneten dritten Zahnrades 48 gebildet sein. Die Mutter 56 ist über ein Innengewinde auf dem Außengewinde der Gewindespindel 52 in axialer Richtung auf und ab schraubbar. Die Mutter 56 weist auf der Außenseite eine koaxial zur Spindelachse G der Gewindespindel 52 orientierte Längsverzahnung 60 auf. Diese Längsverzahnung 60 der Mutter 56 ist in einer entsprechend ebenfalls koaxial zur Spindelachse G der Gewindespindel 52 orientierten, als Innenverzahnung ausgestalteten, Längsverzahnung 64 eines Lagerabschnitts 62 in entsprechend dieser koaxialen Richtung parallel zur Vertikalrichtung z geführt.

Wenn der Anschlag 54 der Gewindespindel 52 unmittelbar vor einem Wiedererreichen der Memory-Position in Anlage mit einem Anschlag 58 der Mutter 56 gelangt, ist die Mutter 56 nicht weiter relativ zur Gewindespindel 52 drehbar und eine mittels des Getriebes 42 übertragene Drehbewegung wird von der Spindel-Mutter-Anordnung 50 auf das Zahnsegment 66 übertragen, welches hierdurch die Zahnstange 70 betätigt. Die Zahnstange 70 betätigt hierbei den Sperrbolzen 82, wodurch das Reibrad 22 blockiert, sobald eine in Drehrichtung hintere Begrenzung der Ausnehmung 28 mit dem Sperrbolzen 82 in Anlage gelangt. Bei einer derartigen Blockierung des Reibrades 22 bewirkt das Reibrad 22 aufgrund seiner Lagerung in der Reibradschwinge 32 über den Sperrbolzen 82 ein Moment auf die Reibradschwinge 32, wodurch das Reibrad 22 stärker gegen die Kontaktfläche 14a gedrückt wird. Anders ausgedrückt, wird hierdurch die Andruckkraft des Reibrades 22 auf die Kontaktfläche 14a erhöht und eine Abrollbewegung des Reibrades 22 entlang der Kontaktfläche 14a der zweiten Sitzschiene 14 abgebremst, wodurch ein Verschieben der ersten Sitzschiene 12 relativ zur zweiten Sitzschiene 14 in Richtung der Memory-Position abgestoppt wird und ein Verschieben der ersten Sitzschiene 12 über die Memory-Position hinaus verhindert ist.

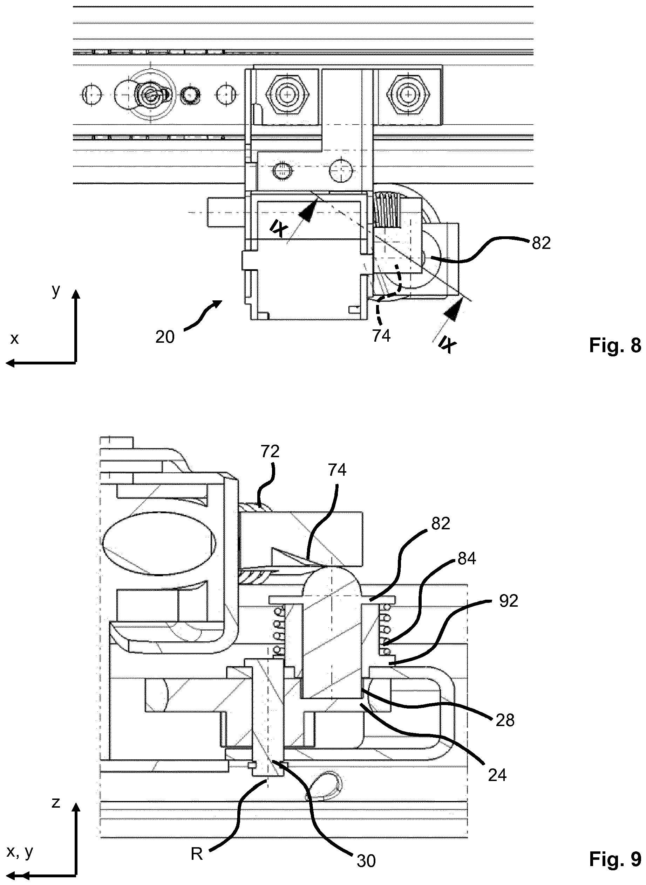

Die Fig. 8 dient im Wesentlichen der Wiedergabe der Lage der Schnittverlaufslinie der in Fig. 9 gezeigten Schnittdarstellung.

In Fig. 9 ist eine weitere Darstellung des Sperrbolzens 82 in der Blockierstellung gezeigt. Vorliegend erstreckt sich die in Form einer Vertiefung ausgestaltete Ausnehmung 28 in der Felge 24 in Vertikalrichtung z lediglich über einen Teil der Dicke der Felge 24. Darüber hinaus ist der Sperrbolzen 82 vorliegend in einer Lagerbuchse 92 geführt, wodurch eine Eindringtiefe des Sperrbolzens 82 begrenzt ist. Durch die Begrenzung der Eindringtiefe des Sperrbolzens 82 in die Ausnehmung 28 ist beispielsweise ein Abrieb des Sperrbolzens 82 an einem Boden der Ausnehmung 28 vermieden. Alternativ kann die Ausnehmung 28 vollständig durch die Felge 24 hindurchreichend ausgebildet sein.

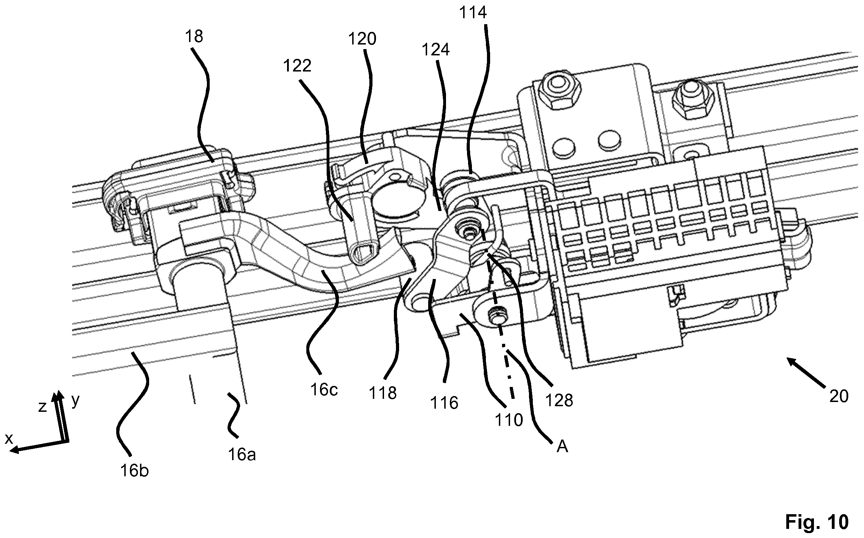

Die Figuren 10 bis 14 zeigen aus unterschiedlichen Blickwinkeln verschiedene Darstellungen des Sitzschienenpaares im Grundzustand gemäß Fig. 3.

Die Reibradschwinge 32 ist mittels einer Schenkelfeder 128 unter einer Erzeugung einer Andruckkraft zwischen dem Reibrad 22 und der Kontaktfläche 14a in Richtung der Kontaktfläche 14a der zweiten Sitzschiene 14 federbelastet. Hierdurch kann die Memory-Vorrichtung 20, während eines Zustandes in welchem der Fahrzeugsitz 1 in seiner Bewegung nicht abgebremst und blockiert werden soll, zur Beaufschlagung des Reibrades 22 mit einer vergleichsweise geringeren Andruckkraft eingerichtet sein, welche lediglich ein unerwünschtes Abheben des Reibrades 22 von der Kontaktfläche 14a verhindert und ein sicheres Erfassen der Relativbewegung der ersten Sitzschiene 12 relativ zur zweiten Sitzschiene 14 ermöglicht. Ferner dient dies einem Schutz eines unbeabsichtigten Abhebens des Reibrades 22 von der Kontaktfläche 14a, wodurch Klappergeräusche entstehen können. Ein beabsichtigtes Abheben des Reibrades 22 von der Kontaktfläche 14a kann ferner mittels eines Reset-Mechanismus erfolgen, wobei die Memory-Vorrichtung 20 mittels einer beispielsweise auf das Getriebe 42 wirkenden Rückstellfeder auf einen einer Memory-Position entsprechenden Nullwert zurücksetzbar ist. Ein derartiger Reset ist beispielsweise bei einem manuellen Einstellen einer neuen Sitzlängsposition durchführbar.

In Fig. 10 ist hierbei gezeigt, dass die Schenkelfeder 128 den ersten Steuerhebel 114 und den Rücksetzhebel 110 in entgegengesetzter Drehrichtung um die gemeinsame Achse A federbelastet. Die Schenkelfeder 128 ist hierbei bestrebt, den Rücksetzhebel 110 in eine das Reibrad 22 nicht abhebende Endstellung zu überführen. Ferner treibt die Schenkelfeder 128 den ersten Steuerhebel 114 in eine nach vorne geneigte Endstellung, welcher der Grundstellung entspricht.

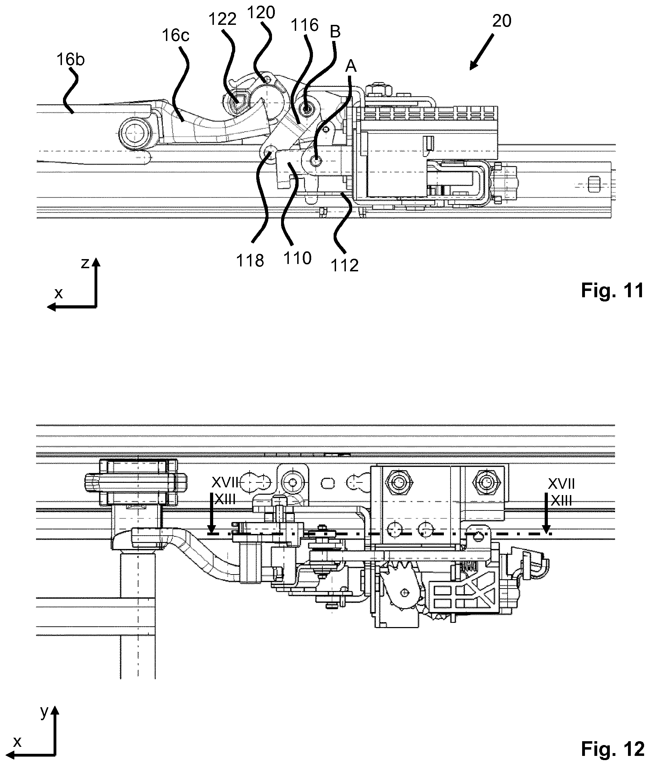

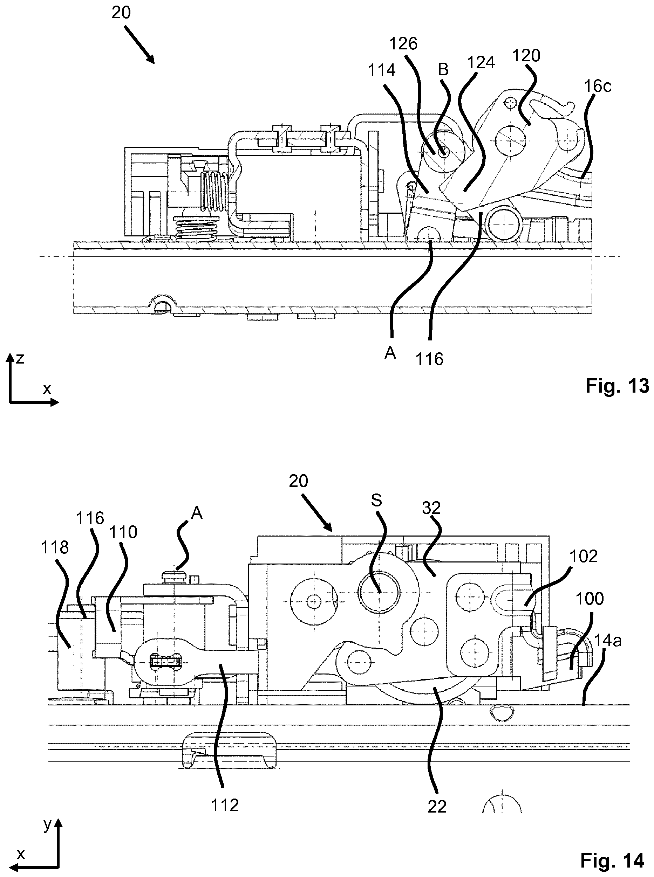

In Fig. 11 ist gezeigt, dass die Memory-Vorrichtung 20 einen Rücksetzhebel 110 aufweist, welcher um eine Achse A drehbar gelagert ist. An einem nach unten abstehenden Abschnitt des Rücksetzhebels 110 ist eine Koppel 112 angeordnet und mit dem Rücksetzhebel 110 wirkverbunden. Wie in Fig. 14 gezeigt ist, ist das gegenüberliegende Ende der Koppel 112 an der Reibradschwinge 32 angelenkt, so dass eine Bewegung der Koppel 112 nach hinten die Reibradschwinge 32 um die Schwingenachse S verschwenkt, und hierdurch das Reibrad 22 von der Kontaktfläche 14a abhebbar ist.

Um die Achse A ebenfalls drehbar gelagert ist ein erster Steuerhebel 114. Der erste Steuerhebel 114 ist relativ zum Rücksetzhebel 110 frei um die Achse A schwenkbar, insbesondere ist der erste Steuerhebel 114 nicht drehfest mit dem Rücksetzhebel 110 verbunden. An einem von der Achse A beabstandeten Ende des ersten Steuerhebels 114 ist ein zweiter Steuerhebel 116 angeordnet. Der zweite Steuerhebel 116 ist um eine am Ende des ersten Steuerhebels 114 gebildete Achse B verschwenkbar. An einem von der Achse B beabstandeten Ende des zweiten Steuerhebels 116 ist ein Steuerbolzen 118 angeordnet. Der Steuerbolzen 118 steht senkrecht vom zweiten Steuerhebel 116, insbesondere parallel zur Querrichtung y, ab. In dem dargestellten Grundzustand ist der Steuerbolzen 118 im Bereich einer vorderen oberen Kante des Rücksetzhebels 110 und zeitgleich im Schwenkbereich des Betätigungshebels 16c angeordnet.

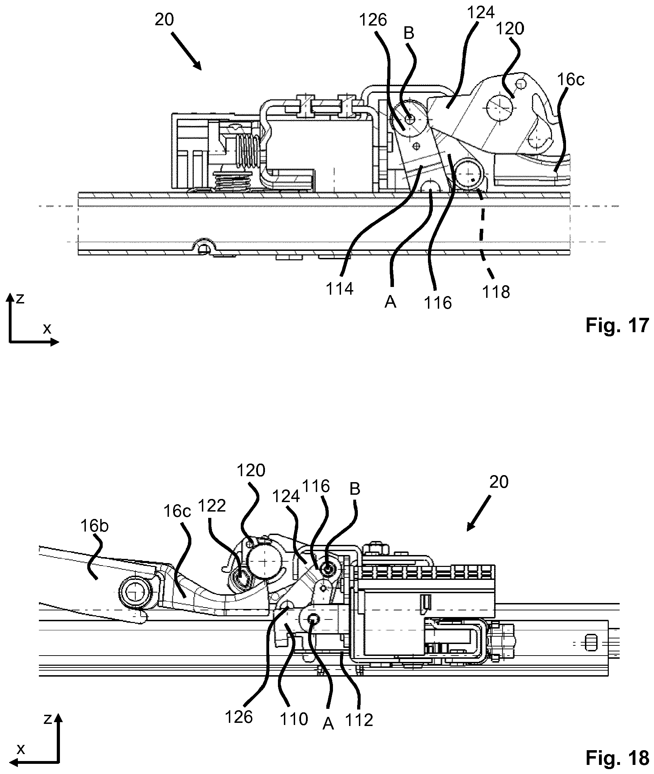

Die Darstellung von Fig. 12 dient im Wesentlichen der Wiedergabe der Lage der Schnittverlaufslinie der in den Figuren 13 und 17 gezeigten Schnittdarstellung.

Fig. 13 zeigt in der Schnittdarstellung, dass die Seilrolle 120 einen radial angeformten Vorsprung 124 aufweist, welcher mit einem mit der Achse B fluchtenden Steuerelement 126 wirkverbunden ist. Wird die Seilrolle 120 um ihre Drehachse verdreht, so schiebt der Vorsprung 124 das Steuerelement 126 nach hinten und verschwenkt hierdurch den ersten Steuerhebel 114, welcher hierbei den zweiten Steuerhebel 116 mitnimmt und dadurch um die Achse A verschwenkt. Dieser Zustand nachfolgend anhand der Figuren 17 und 18 beschrieben.

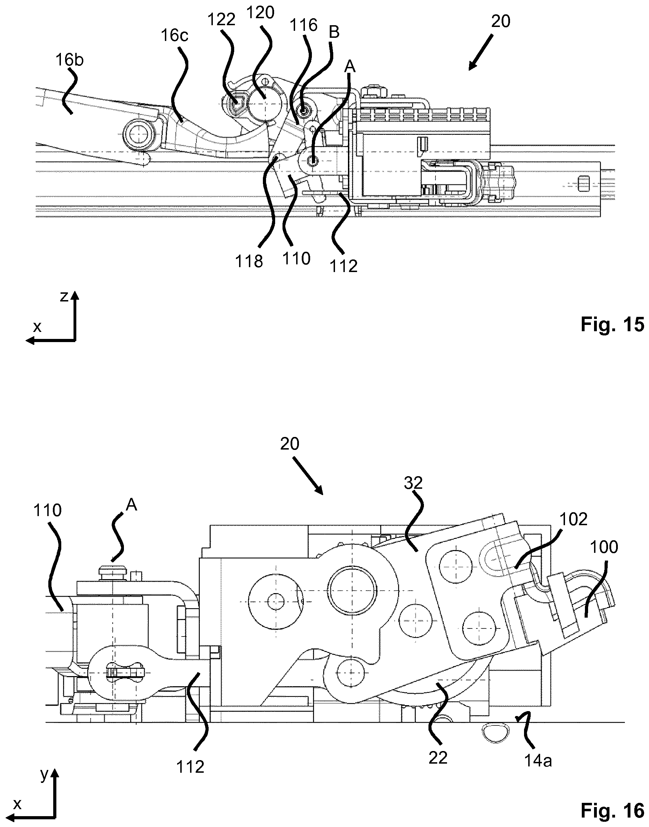

In den Figuren 15 und 16 ist der Längseinsteller 10 in einem Zustand dargestellt, welcher durch ein Anheben des Handgriffs 16b durch den Insassen herbeigeführt werden kann, ohne dass die Lehne 5 des Fahrzeugsitzes 1 vorgeklappt ist. Fig. 16 zeigt eine vergrößerte Ansicht von unten auf die Memory-Vorrichtung 20 von Fig. 15. Der gezeigte Zustand wird beispielsweise eingenommen, wenn der Insasse den Fahrzeugsitz 1 von der aktuellen Sitzlängsposition in eine abweichende, geänderte Sitzlängsposition verstellen möchte. Die geänderte Sitzlängsposition entspricht dann einer neuen gespeicherten Sitzlängsposition.

Bei einem Anheben des Handgriffs 16b durch den Insassen erfolgt eine Entriegelung des Längseinstellers 10, insbesondere ein Entriegeln oder Öffnen der Schienenverriegelung 18, wodurch die erste Sitzschiene 12 für eine Relativbewegung zur zweiten Sitzschiene 14 freigegeben wird. Hierbei verschwenkt der Betätigungshebel 16c um eine Drehachse der Übertragungsstange 16a und betätigt hierbei über den Steuerbolzen 118 den Rücksetzhebel 110. Der Rücksetzhebel 110 wird bei einer Betätigung durch den Betätigungshebel 16c um die Drehachse A gedreht und hebt mittels der Koppel 112 ein auf der Reibradschwinge 32 gelagertes Reibrad 22 von der Kontaktfläche 14a der zweiten Sitzschiene 14 ab. Durch das Abheben des Reibrades 22 von der Kontaktfläche 14a wird das Reibrad 22, bzw. eine von der Memory-Vorrichtung 20 gespeicherte Sitzlängsposition oder eine erfasste Relativbewegung, auf einen Nullwert oder definierten Ausgangswert zurückgesetzt. Die Memory-Vorrichtung 20 weist hierzu eine in den Figuren nicht dargestellte auf das Reibrad 22, bzw. bevorzugt auf das Getriebe 42 wirkende Rückstellfeder auf.

In den Figuren 17 und 18 ist der Längseinsteller 10 in einem Zustand dargestellt, welcher durch ein Vorklappen der Lehne 5 des Fahrzeugsitzes 1 herbeigeführt werden kann. Fig. 18 zeigt eine Seitenansicht der Memory-Vorrichtung 20 von Fig. 17. Die Lehne 5 ist vorliegend mittels eines Bowdenzuges mit dem Längseinsteller 10 wirkverbunden. Der dargestellte Zustand wird beispielsweise eingenommen, wenn der Fahrzeugsitz 1 in eine sogenannte Easy-Entry-Stellung überführt wird. Eine Überführung des Fahrzeugsitzes 1 in die Easy-Entry-Stellung dient bekanntermaßen der Schaffung von ausreichend Platz zum leichteren Einsteigen in eine hintere Sitzreihe eines Kraftfahrzeuges.

Der Bowdenzug weist zwei Bowdenzugenden auf, von denen ein Bowdenzugende an der Seilrolle 120 gehalten ist. Die Seilrolle 120 ist um eine Drehachse drehbar gelagert. Die Seilrolle 120 weist einen axial abstehenden Nocken 122 auf, welcher bei einer Drehung der Seilrolle 120 derart auf den Betätigungshebel 16c wirkt, dass der Betätigungshebel 16c um die Drehachse der Übertragungsstange 16a verschwenkt wird und hierdurch die Schienenverriegelung 18 des Längseinstellers 10 entriegelt wird. Die Seilrolle 120 ist derart ausgestaltet, dass diese mittels des radial abstehenden Vorsprungs 124 den ersten Steuerhebel 114 verschwenken kann. Hierzu wirkt die Seilrolle 120 mittels des Vorsprungs 124 auf das mit der Achse B fluchtendes Steuerelement 126, wenn die Seilrolle 120 um die Drehachse verdreht wird. Der Vorsprung 124 verschiebt das Steuerelement 126, wie dargestellt, nach hinten, wodurch der erste Steuerhebel 114 verschwenkt ist. Die Schwenkbewegung des ersten Steuerhebels 114 folgend, bewegt sich der zweite Steuerhebel 116 ebenfalls entsprechend der Bewegung der Achse B nach hinten. Hierbei wird der Steuerbolzen 118 aus dem Schwenkbereich des Betätigungshebels 16c gezogen.

Wird nun die Lehne 5 des Fahrzeugsitzes 1 ausgehend von der Gebrauchsstellung vorgeklappt, um den Fahrzeugsitz 1 in die Easy-Entry-Stellung zu überführen, bewegt der Bowdenzug die Seilrolle 120 um deren Drehachse. Während der Drehung der Seilsolle 120 wirkt diese zunächst mittels des radial abstehenden Vorsprungs 124 auf den ersten Steuerhebel 114, wodurch dieser um die Achse A verschwenkt wird. Hierdurch wird der zweite Steuerhebel 116, welcher an dem ersten Steuerhebel 114 gehalten ist, mit verschwenkt, wodurch der an dem zweiten Steuerhebel 116 gehaltene Steuerbolzen 118 aus einem Kontaktbereich, in welcher er von dem Betätigungshebel 16c kontaktierbar ist, herausbewegt ist. Darüber hinaus erfolgt mittels des an der Seilrolle 120 axial abstehenden Nockens 122 eine Betätigung des Betätigungshebels 16c, welcher in bereits beschriebener Weise verschwenkt und die Schienenverriegelung 18 entriegelt. Anders als bei der zuvor beschriebenen Betätigung durch ein manuelles Anheben des Handgriffs 16b, erfolgt nunmehr bei der Betätigung durch ein Vorklappen der Lehne 5 kein Zurücksetzten der Memory-Vorrichtung 20, da der Betätigungshebel 16c außer Wirkverbindung mit dem Rücksetzhebel 110 gebracht ist.

Die in der vorstehenden Beschreibung und den Zeichnungen offenbarten Merkmale können sowohl einzeln als auch in Kombination für die Verwirklichung der Erfindung in ihren verschiedenen Ausgestaltungen von Bedeutung sein.

Obwohl die Erfindung in den Zeichnungen und der vorausgegangenen Darstellung im Detail beschrieben wurde, sind die Darstellungen illustrativ und beispielhaft und nicht einschränkend zu verstehen. Insbesondere ist die Wahl der zeichnerisch dargestellten Proportionen der einzelnen Elemente nicht als erforderlich oder beschränkend auszulegen. Weiterhin ist die Erfindung insbesondere nicht auf die erläuterten Ausführungsbeispiele beschränkt. Weitere Varianten der Erfindung und ihre Ausführung ergeben sich für den Fachmann aus der vorangegangenen Offenbarung und den Figuren.

In den Ansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus. Eine einzelne Vorrichtung kann die Funktionen mehrerer in den Ansprüchen genannten Einheiten bzw. Einrichtungen ausführen.

### Bezugszeichenliste

- 1: Fahrzeugsitz
- 3: Sitzteil
- 5: Lehne
- 10: Längseinsteller
- 12: erste Sitzschiene
- 14: zweite Sitzschiene
- 14a: Kontaktfläche
- 16: Betätigungseinrichtung
- 16a: Übertragungsstange
- 16b: Handgriff
- 16c: Betätigungshebel
- 18: Schienenverriegelung
- 20: Memory-Vorrichtung
- 22: Reibrad
- 24: Felge
- 26: Reibbelag
- 28: Ausnehmung
- 30: Lagerstift
- 32: Reibradschwinge
- 34: erster Bolzen
- 36: zweiter Bolzen
- 38: erstes Trägerteil
- 40: zweites Trägerteil
- 42: Getriebe
- 44: erstes Zahnrad
- 46: zweites Zahnrad
- 48: drittes Zahnrad
- 50: Spindel-Mutter-Anordnung
- 52: Gewindespindel
- 54: Anschlag
- 56: Mutter
- 58: Anschlag
- 60: Längsverzahnung
- 62: Lagerabschnitt
- 64: Längsverzahnung
- 66: Zahnsegment
- 68: Lagerbolzen
- 70: Zahnstange
- 72: Federelement
- 74: Steuerkontur
- 78: erstes Gehäuseteil
- 80: zweites Gehäuseteil
- 82: Sperrbolzen
- 84: Federelement
- 86: Abstandselement
- 88: Gewindebolzen
- 90: Mutter
- 92: Lagerbuchse
- 100: Bremselement
- 102: Adapter
- 110: Rücksetzhebel
- 112: Koppel
- 114: erster Steuerhebel
- 116: zweiter Steuerhebel
- 118: Steuerbolzen
- 120: Seilrolle
- 122: Nocken
- 124: Vorsprung
- 126: Steuerelement
- 128: Schenkelfeder
- A: Achse
- B: Achse
- R: Reibradachse
- S: Schwingenachse
- G: Spindelachse
- x: Längsrichtung
- y: Querrichtung
- z: Vertikalrichtung

## Patentansprüche

1. Längseinsteller (10) für einen ein Sitzteil (3) und eine Lehne (5) aufweisenden Fahrzeugsitz (1), insbesondere einen Kraftfahrzeugsitz, wobei der Längseinsteller (10) eine erste Sitzschiene (12) und eine zweite Sitzschiene (14) aufweist, wobei die erste Sitzschiene (12) relativ zur zweiten Sitzschiene (14) in einer Längsrichtung (x) verschiebbar ist, wobei eine der ersten Sitzschiene (12) zugeordnete und mit der zweiten Sitzschiene (14) zusammenwirkende Memory-Vorrichtung (20) vorgesehen ist, wobei eine von einer als Memory-Position bezeichneten Sitzlängsposition ausgehende Relativbewegung zwischen der ersten Sitzschiene (12) und der zweiten Sitzschiene (14) mittels eines Reibrades (22) der Memory-Vorrichtung (20) erfassbar ist, wobei das Reibrad (22) hierzu eine relativ zur Memory-Vorrichtung (20) bewegbare Kontaktfläche (14a) kontaktiert und abfährt, wobei das Reibrad (22) der Memory-Vorrichtung (20) bei einem Wiedererreichen der Memory-Position blockierbar ist, wobei eine zwischen der ersten Sitzschiene (12) und der zweiten Sitzschiene (14) wirkende Schienenverriegelung (18) mittels eins Handgriffs (16b) und durch ein Vorklappen der Lehne (5) des Fahrzeugsitzes (1) entriegelbar ist,
wobei ein Betätigungshebel (16c) auf einen Rücksetzhebel (110) wirkt und die Memory-Vorrichtung (20) hierdurch zurücksetzbar ist, wenn eine Betätigung der Schienenverriegelung (18) mittels des Handgriffs (16b) erfolgt, und
wobei sich der Betätigungshebel (16c) außer Wirkverbindung mit dem Rücksetzhebel (110) befindet, wenn die Betätigung der Schienenverriegelung (18) durch ein Vorklappen der Lehne (5) erfolgt.

2. Längseinsteller (10) gemäß Anspruch 1, wobei das Reibrad (22) um eine Reibradachse (R) drehbar in einer um eine Schwingenachse (S) schwenkbaren Reibradschwinge (32) gelagert ist.

3. Längseinsteller (10) gemäß Anspruch 2, wobei ein Bremselement (100) an einem hinteren Ende der Reibradschwinge (32) angeordnet ist.

4. Längseinsteller (10) gemäß einem der Ansprüche 2 oder 3, wobei die Reibradschwinge (32) mittels des Rücksetzhebels (110) derart verschwenkbar ist, dass das Reibrad (22) von der Kontaktfläche (14a) abhebbar ist.

5. Längseinsteller (10) gemäß einem der Ansprüche 2 bis 4, wobei eine Resetfeder wenigstens mittelbar auf das Reibrad (22) wirkt und das Reibrad (22) zurücksetzt, wenn das Reibrad (22) von der Kontaktfläche (14a) abgehoben ist.

6. Längseinsteller (10) gemäß einem der Ansprüche 2 bis 5, wobei der Rücksetzhebel (110) auf eine an der Reibradschwinge (32) angelenkte Koppel (112) wirkt.

7. Längseinsteller (10) gemäß einem der Ansprüche 2 bis 6, wobei die Reibradachse (R) parallel zur Längsrichtung (x) betrachtet hinter der Schwingenachse (S) angeordnet ist.

8. Längseinsteller (10) gemäß einem der Ansprüche 2 bis 7, wobei die Reibradachse (R) einen geringeren Abstand zur Kontaktfläche (14a) als die Schwingenachse (S) aufweist.

9. Längseinsteller (10) gemäß einem der Ansprüche 1 bis 8, wobei das mittels eines Sperrbolzens (82) blockierbare Reibrad (22) in blockiertem Zustand über den Sperrbolzen (82) ein Moment auf die Reibradschwinge (32) bewirkt, wodurch das Reibrad (22) gegen die Kontaktfläche (14a) gedrückt wird.

10. Längseinsteller (10) gemäß einem der Ansprüche 1 bis 9, wobei der Rücksetzhebel (110) federbelastet ist, insbesondere in Richtung einer das Reibrad (22) nicht von der Kontaktfläche (14a) abhebenden Endstellung.

11. Längseinsteller (10) gemäß einem der Ansprüche 1 bis 10, wobei ein mit dem Rücksetzhebel (110) um eine gemeinsame Achse (A) schwenkbarer erster Steuerhebel (114) vorgesehen ist, welcher an seinem von der Achse (A) beabstandeten Ende einen zweiten Steuerhebel (116) schwenkbar hält.

12. Längseinsteller (10) gemäß Anspruch 11, wobei ein an einem freien Ende des zweiten Steuerhebels (116) gehaltener Steuerbolzen (118) im Schwenkbereich des Betätigungshebels (16c) angeordnet ist, wenn der erste Steuerhebel (114) in einer Endstellung gehalten ist, und der Steuerbolzen (118) aus dem Schwenkbereich des Betätigungshebels (16c) herausgeschwenkt ist, wenn der erste Steuerhebel (114) in eine zweite Endstellung verschwenkt ist.

13. Längseinsteller (10) gemäß einem der Ansprüche 1 bis 12, wobei eine Schenkelfeder (128) vorgesehen ist, welche den ersten Steuerhebel (114) und den Rücksetzhebel (110) in entgegengesetzter Drehrichtung um die gemeinsame Achse (A) federbelastet.

14. Längseinsteller (10) gemäß einem der Ansprüche 1 bis 13, wobei mittels einer Seilrolle (120) der erste Steuerhebel (114) in Richtung der zweiten Endstellung verschwenkbar ist, wenn die Lehne (5) vorgeklappt ist, wobei die Seilrolle (120) auf den Betätigungshebel (16c) wirkt, wenn die Lehne (5) vorgeklappt ist.

15. Fahrzeugsitz (1) aufweisend ein Sitzteil (3), eine Lehne (5) und einen mit dem Sitzteil (3) verbundenen Längseinsteller (10) gemäß einem der vorhergehenden Ansprüche.

## Claims

1. Longitudinal adjuster (10) for a vehicle seat (1), in particular a motor-vehicle seat, having a seat part (3) and a backrest (5), wherein the longitudinal adjuster (10) has a first seat rail (12) and a second seat rail (14), wherein the first seat rail (12) can be displaced in a longitudinal direction (x) relative to the second seat rail (14), wherein a memory device (20) is provided, said memory device being assigned to the first seat rail (12) and interacting with the second seat rail (14), wherein a relative movement which takes place between the first seat rail (12) and the second seat rail (14), starting from a longitudinal seat position referred to as the memory position, can be detected by means of a friction wheel (22) of the memory device (20), wherein, for this purpose, the friction wheel (22) establishes contact with, and moves along, a contact surface (14a), which can be moved relative to the memory device (20), wherein the friction wheel (22) of the memory device (20) can be blocked when the memory position is reached again, wherein a rail-locking means (18), which acts between the first seat rail (12) and the second seat rail (14), can be unlocked by means of a handle (16b) and by virtue of the backrest (5) of the vehicle seat (1) being swung forwards, wherein an actuating lever (16c) acts on a resetting lever (110), and the memory device (20) can be reset as a result, when the rail-locking means (18) is actuated by means of the handle (16b), and wherein the actuating lever (16c) is not in operative connection with the resetting lever (110) when the rail-locking means (18) is actuated by virtue of the backrest (5) being swung forwards.

2. Longitudinal adjuster (10) according to Claim 1, wherein the friction wheel (22) is mounted, for rotation about a friction-wheel axis (R), in a friction-wheel rocker (32) which can be pivoted about a rocker axis (S).

3. Longitudinal adjuster (10) according to Claim 2, wherein a braking element (100) is arranged at a rear end of the friction-wheel rocker (32).

4. Longitudinal adjuster (10) according to either of Claims 2 and 3, wherein the friction-wheel rocker (32) can be pivoted by means of the resetting lever (110) such that the friction wheel (22) can be lifted off from the contact surface (14a).

5. Longitudinal adjuster (10) according to one of Claims 2 to 4, wherein a reset spring acts on the friction wheel (22) at least indirectly and resets the friction wheel (22) when the friction wheel (22) has been lifted off from the contact surface (14a).

6. Longitudinal adjuster (10) according to one of Claims 2 to 5, wherein the resetting lever (110) acts on a connecting rod (112), which is articulated on the friction-wheel rocker (32).

7. Longitudinal adjuster (10) according to one of Claims 2 to 6, wherein the friction-wheel axis (R) is arranged behind the rocker axis (S), as seen parallel to the longitudinal direction (x).

8. Longitudinal adjuster (10) according to one of Claims 2 to 7, wherein the friction-wheel axis (R) is spaced apart from the contact surface (14a) by a smaller distance than is the rocker axis (S).

9. Longitudinal adjuster (10) according to one of Claims 1 to 8, wherein, in the blocked state, the friction wheel (22), which can be blocked by means of an arresting bolt (82), subjects the friction-wheel rocker (32) to a moment via the arresting bolt (82), as a result of which the friction wheel (22) is pushed against the contact surface (14a).

10. Longitudinal adjuster (10) according to one of Claims 1 to 9, wherein the resetting lever (110) is spring-loaded, in particular in the direction of an end position in which the friction wheel (22) is not lifted off from the contact surface (14a).

11. Longitudinal adjuster (10) according to one of Claims 1 to 10, wherein a first control lever (114) is provided, said control lever being pivotable with the resetting lever (110) about a common axis (A) and, at its end which is spaced apart from the axis (A), retaining a second control lever (116) in a pivotable manner.

12. Longitudinal adjuster (10) according to Claim 11, wherein a control bolt (118), which is retained at a free end of the second control lever (116), is arranged in the pivoting region of the actuating lever (16c) when the first control lever (114) is retained in one end position, and the control bolt (118) is pivoted out of the pivoting region of the actuating lever (16c) when the first control lever (114) is pivoted into a second end position.

13. Longitudinal adjuster (10) according to one of Claims 1 to 12, wherein a leg spring (128) is provided, and spring-loads the first control lever (114) and the resetting lever (110) in opposite directions of rotation about the common axis (A).

14. Longitudinal adjuster (10) according to one of Claims 1 to 13, wherein a pulley (120) can pivot the first control lever (114) in the direction of the second end position when the backrest (5) has been swung forwards, wherein the pulley (120) acts on the actuating lever (16c) when the backrest (5) has been swung forwards.

15. Vehicle seat (1) having a seat part (3), a backrest (5) and a longitudinal adjuster (10) according to one of the preceding claims, said longitudinal adjuster being connected to the seat part (3).

## Revendications

1. Dispositif de réglage longitudinal (10) destiné à un siège de véhicule (1), en particulier un siège de véhicule automobile, comportant une partie formant une assise (3) et un dossier (5), le dispositif de réglage longitudinal (10) comprenant un premier rail de siège (12) et un deuxième rail de siège (14), le premier rail de siège (12) pouvant être déplacé par rapport au deuxième rail de siège (14) dans une direction longitudinale (x), un dispositif à mémoire (20) étant prévu qui coopère avec le deuxième rail de siège (14) et qui est associé au premier rail de siège (12), un mouvement relatif qui est effectué entre le premier rail de siège (12) et le deuxième rail de siège (14) et qui part d'une position de siège longitudinale désignée par position en mémoire pouvant être détecté au moyen d'une roue à friction (22) du dispositif à mémoire (20), pour cela la roue à friction (22) venant en contact avec une surface de contact (14a), mobile par rapport au dispositif à mémoire (20), et roulant sur celle-ci, la roue à friction (22) du dispositif à mémoire (20) pouvant être bloquée lorsque la position en mémoire est à nouveau atteinte, un dispositif de verrouillage de rail (18) qui agit entre le premier rail de siège (12) et le deuxième rail de siège (14) pouvant être déverrouillé au moyen d'une poignée (16b) et par rabattement du dossier (5) du siège de véhicule (1), un levier d'actionnement (16c) agissant sur un levier de réinitialisation (110) et le dispositif à mémoire (20) pouvant ainsi être réinitialisé lorsque le dispositif de verrouillage de rail (18) est actionné au moyen de la poignée (16b), et le levier d'actionnement (16c) n'étant plus relié fonctionnellement au levier de réinitialisation (110) lorsque le dispositif de verrouillage de rail (18) est actionné par rabattement du dossier (5).

2. Dispositif de réglage longitudinal (10) selon la revendication 1, la roue à friction (22) étant montée dans un bras oscillant (32), pouvant pivoter sur un axe d'oscillation (S), de manière rotative sur un axe (R).

3. Dispositif de réglage longitudinal (10) selon la revendication 2, un élément de freinage (100) étant disposé à une extrémité arrière du bras oscillant (32) de la roue de friction.

4. Dispositif de réglage longitudinal (10) selon l'une des revendications 2 ou 3, le bras oscillant (32) de la roue de friction pouvant pivoter au moyen du levier de réinitialisation (110) de sorte que la roue à friction (22) puisse être soulevée de la surface de contact (14a).

5. Dispositif de réglage longitudinal (10) selon l'une des revendications 2 à 4, un ressort de réinitialisation agissant au moins indirectement sur la roue à friction (22) et réinitialise la roue à friction (22) lorsque la roue à friction (22) est soulevée de la surface de contact (14a).

6. Dispositif de réglage longitudinal (10) selon l'une des revendications 2 à 5, le levier de réinitialisation (110) agissant sur un dispositif d'accouplement (112) relié de façon articulée au bras oscillant (32) de la roue à friction.

7. Dispositif de réglage longitudinal (10) selon l'une des revendications 2 à 6, l'axe (R) de la roue à friction étant disposé en arrière de l'axe (S) du bras oscillant dans une vue parallèle à la direction longitudinale (x).

8. Dispositif de réglage longitudinal (10) selon l'une des revendications 2 à 7, l'axe (R) de la roue à friction est placé à une plus faible distance de la surface de contact (14a) que l'axe (S) du bras oscillant.

9. Dispositif de réglage longitudinal (10) selon l'une des revendications 1 à 8, la roue à friction (22), qui peut être bloquée au moyen d'un boulon de blocage (82), générant à l'état bloqué au moyen du boulon de blocage (82) un moment sur le bras oscillant (32) de la roue à friction, de sorte que la roue à friction (22) est pressée contre la surface de contact (14a).

10. Dispositif de réglage longitudinal (10) selon l'une des revendications 1 à 9, le levier de réinitialisation (110) étant chargé par un ressort, en particulier en direction d'une position finale dans laquelle la roue à friction (22) n'est pas soulevée de la surface de contact (14a).

11. Dispositif de réglage longitudinal (10) selon l'une des revendications 1 à 10, un premier levier de commande (114), qui peut pivoter sur un axe commun (A) au moyen du levier de réinitialisation (110), étant prévu qui supporte, à son extrémité éloignée de l'axe (A), un deuxième levier de commande (116) de manière pivotante.

12. Dispositif de réglage longitudinal (10) selon la revendication 11, un boulon de commande (118), maintenu à une extrémité libre du deuxième levier de commande (116), étant disposé dans la zone de pivotement du levier d'actionnement (16c) lorsque le premier levier de commande (114) est maintenu dans une position d'extrémité et le boulon de commande (118) étant pivoté en dehors de la zone de pivotement du levier d'actionnement (16c) lorsque le premier levier de commande (114) pivote dans une deuxième position d'extrémité.

13. Dispositif de réglage longitudinal (10) selon l'une des revendications 1 à 12, un ressort à branche (128) étant prévu qui contraint élastiquement le premier levier de commande (114) et le levier de réinitialisation (110) dans le sens opposé de rotation sur l'axe commun (A).

14. Dispositif de réglage longitudinal (10) selon l'une des revendications 1 à 13, le premier levier de commande (114) pouvant pivoter en direction de la deuxième position d'extrémité au moyen d'une poulie (120), lorsque le dossier (5) est rabattu vers l'avant, la poulie (120) agissant sur le levier d'actionnement (16c) lorsque le dossier (5) est rabattu vers l'avant.

15. Siège de véhicule (1) comprenant une partie formant une assise (3), un dossier (5) et un dispositif de réglage longitudinal (10), relié à la partie formant l'assise (3), selon l'une des revendications précédentes.
